(19) Europäisches Patentamt
European Patent Office
Office européen des brevets

(11) **EP 4 503 200 B1**

(12) **EUROPEAN PATENT SPECIFICATION**

(45) Date of publication and mention
of the grant of the patent:
**28.01.2026 Bulletin 2026/05**

(21) Application number: **23792217.4**

(22) Date of filing: **20.04.2023**

(51) International Patent Classification (IPC):
$H01M\ 4/62^{(2006.01)}$  $H01M\ 4/139^{(2010.01)}$
$H01M\ 4/13^{(2010.01)}$  $H01M\ 10/052^{(2010.01)}$
$H01M\ 4/131^{(2010.01)}$  $H01M\ 4/525^{(2010.01)}$
$H01M\ 4/505^{(2010.01)}$  $H01M\ 4/1391^{(2010.01)}$

(52) Cooperative Patent Classification (CPC):
(C-Sets available)
H01M 4/139; C08J 3/226; C08K 3/041;
C08L 27/16; C08L 27/18; H01M 4/04;
H01M 4/0404; H01M 4/13; H01M 4/131;
H01M 4/1391; H01M 4/505; H01M 4/525;
H01M 4/62; H01M 4/623; H01M 4/625;      (Cont.)

(86) International application number:
**PCT/KR2023/005409**

(87) International publication number:
**WO 2023/204643 (26.10.2023 Gazette 2023/43)**

(54) **CONDUCTIVE MATERIAL MASTER BATCH AND DRY ELECTRODE OBTAINED BY USING THE SAME**

MASTERBATCH AUS LEITFÄHIGEM MATERIAL UND UNTER VERWENDUNG DAVON HERGESTELLTE TROCKENELEKTRODE

MÉLANGE MAÎTRE DE MATÉRIAU CONDUCTEUR ET ÉLECTRODE SÈCHE PRÉPARÉE EN L'UTILISANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.04.2022  KR 20220049191
20.04.2022  KR 20220049192**

(43) Date of publication of application:
**05.02.2025 Bulletin 2025/06**

(73) Proprietor: **LG Energy Solution, Ltd.
Seoul 07335 (KR)**

(72) Inventors:
• **KANG, Seong-Wook**
**Daejeon 34122 (KR)**
• **HAN, Jae-Sung**
**Daejeon 34122 (KR)**
• **KWAK, Sang-Min**
**Daejeon 34122 (KR)**
• **YOON, Kyung-Hwan**
**Daejeon 34122 (KR)**
• **SHIN, Dong-Oh**
**Daejeon 34122 (KR)**
• **LEE, Ki-Seok**
**Daejeon 34122 (KR)**
• **YOO, Kwang-Ho**
**Daejeon 34122 (KR)**
• **LEE, Nam-Jeong**
**Daejeon 34122 (KR)**

(74) Representative: **Plasseraud IP
104 Rue de Richelieu
CS92104
75080 Paris Cedex 02 (FR)**

(56) References cited:
JP-A- 2000 123 874    JP-A- 2015 130 287
JP-B2- 6 699 684      KR-A- 20030 034 427
KR-A- 20100 006 396   KR-A- 20160 146 580
KR-A- 20210 006 899

(52) Cooperative Patent Classification (CPC): (Cont.)
**H01M 10/052;** C08F 114/26; C08F 214/22;
C08K 2003/2203; C08L 2205/02; H01M 2004/021;
Y02E 60/10

C-Sets
**C08L 27/16, C08L 27/18, C08K 3/04;**
**C08L 27/16, C08L 27/18, C08K 3/041;**

**C08L 27/18, C08L 27/16, C08K 3/01;**
**C08L 27/18, C08L 27/16, C08K 3/041;**
C08F 214/22, C08F 214/28

**Description**

TECHNICAL FIELD

The present disclosure relates to a conductive material master batch for use in a dry electrode, a method for preparing the same, and an electrode obtained by using the same.

The present application claims priority to Korean Patent Application No. 10-2022-0049191 and Korean Patent Application No. 10-2022-0049192 filed on April 20, 2022 in the Republic of Korea.

BACKGROUND ART

Due to a rapid increase in use of fossil fuel, there has been an increasing need for use of substitute energy and clean energy. The most actively studied field as a part of attempts to meet such a need is the field of power generation and power storage using electrochemistry.

Currently, typical examples of electrochemical devices using electrochemical energy include secondary batteries, and application thereof has been extended gradually.

A lithium secondary battery as a representative of such secondary batteries has been used not only as an energy source of mobile instruments but also as a power source of electric vehicles and hybrid electric vehicles capable of substituting for vehicles, such as gasoline vehicles and diesel vehicles, using fossil fuel and regarded as one of the main causes of air pollution, recently. In addition, application of such a lithium secondary battery has been extended even to a supplementary power source of electric power through the formation into a grid.

A process of manufacturing such a lithium secondary battery is broadly divided into an electrode-forming step, an electrode assembly-forming step and an aging step. The electrode-forming step is further divided into an active material-mixing step, an electrode-coating step, a drying step, a pressing step, a slitting step, a winding step, or the like.

Among the steps, the active material-mixing step is a step of mixing the coating ingredients for forming an electrode active layer configured to carry out electrochemical reactions actually in the electrode. Particularly, an electrode active material as an essential element of the electrode is mixed with other additives, including a conductive material, a filler, a binder used for the binding of powder particles among themselves and the adhesion to a current collector, a solvent for imparting viscosity and dispersing powder, or the like, to prepare a slurry having flowability. Such a composition mixed for forming an electrode active layer is also called an electrode mixture in a broad sense.

Then, an electrode-coating step of applying the electrode mixture onto a current collector having electrical conductivity and a drying step of removing the solvent contained in the electrode mixture are carried out, and then the resultant electrode is pressed to a predetermined thickness.

Meanwhile, as the solvent contained in the electrode mixture evaporates during the drying step, defects, such as pinholes or cracks, may be generated in the preliminarily formed electrode active layer. In addition, the active layer is not dried uniformly at the internal part and external part thereof, and thus a powder floating phenomenon may occur due to a difference in solvent evaporation rate. In other words, a powder present in a portion dried earlier may float, while forming a gap from a portion dried relatively later, resulting in degradation of electrode quality. Therefore, recently, active studies have been conducted to manufacture a dry electrode without using any solvent.

In general, the dry electrode is obtained by laminating a free standing-type film, including an active material, a binder and a conductive material and prepared in the form of a film, onto a current collector. To improve the workability of a dry electrode, there has been developed a method for preparing a powder mixture through the steps of mixing, kneading and pulverizing starting materials for a dry electrode, including an activated carbon conductive material, an active material, a binder, or the like. Herein, as the BET specific surface area of the conductive material is increased, it is more difficult to disperse the conductive material homogeneously. Therefore, there are problems in that the content of the conductive material is increased as compared to a wet electrode, and carbon nanotubes (CNTs) having a large specific surface area cannot be used efficiently.

Under these circumstances, there has been continuous research and development to improve the dispersibility of a conductive material and to improve the performance of a dry electrode obtained by using the conductive material.

DISCLOSURE

Technical Problem

The present disclosure is designed to solve the problems of the related art, and therefore the present disclosure is directed to providing a conductive material master batch for use in manufacturing a dry electrode and a method for preparing the same.

The present disclosure is also directed to providing a dry electrode obtained by using, as a conductive material, a conductive material master batch showing improved dispersibility of a conductive material, and a method for manufacturing the same.

One aspect of the present disclosure is directed to providing a conductive material master batch in which the dispersibility of a conductive material having a large BET specific surface area is improved, and a method for preparing the same. The present disclosure is also directed to providing a conductive material master batch in which a high content of conductive material is contained stably, and a method for preparing the same.

Another aspect of the present disclosure is directed to providing an electrode which uses, as a conductive material, a conductive material master batch showing improved dispersibility of a conductive material having a large BET specific surface area, and thus has a reduced content of conductive material and provides improved electrode resistance characteristics, and a method for manufacturing the same. The present disclosure is also directed to providing an electrode having improved electrode resistance characteristics, while maintaining excellent mechanical properties, such as tensile strength, and a method for manufacturing the same.

Still another aspect of the present disclosure is directed to providing a method for manufacturing an electrode which can provide an electrode with improved flexibility and mechanical properties by minimizing fine division of an active material and maximizing fibrilization of a binder.

Technical Solution

In one aspect of the present disclosure, there is provided a conductive material master batch according to any one of the following embodiments.

According to the first embodiment of the present disclosure, there is provided a conductive material master batch including a conductive material, a polyvinylidene fluoride (PVDF)-based binder, and a polytetrafluoroethylene (PTFE) binder, wherein the conductive material has a BET specific surface area of 80 $m^2/g$ or more, and each of the PVDF-based binder and the PTFE binder independently has a crystallization degree of 30% or less.

According to the second embodiment of the present disclosure, there is provided the conductive material master batch as defined in the first embodiment, wherein the conductive material includes carbon nanotubes alone, or carbon nanotubes and a dot-like conductive material.

According to the third embodiment of the present disclosure, there is provided the conductive material master batch as defined in the second embodiment, wherein the electrode conductive material includes carbon nanotubes and a dot-like conductive material, and the dot-like conductive material is carbon black, activated carbon, graphite, or a mixture of two or more of them.

According to the fourth embodiment of the present disclosure, there is provided the conductive material master batch as defined in the second or the third embodiment, wherein the weight ratio of the carbon nanotubes to the dot-like conductive material is 100:0-10:90.

According to the fifth embodiment of the present disclosure, there is provided the conductive material master batch as defined in any one of the second to the fourth embodiments, wherein the carbon nanotubes are dispersed in the form of nanofibers.

According to the sixth embodiment of the present disclosure, there is provided the conductive material master batch as defined in any one of the second to the fifth embodiments, wherein the carbon nanotubes have a diameter of 0.1-50 nm.

According to the seventh embodiment of the present disclosure, there is provided the conductive material master batch as defined in any one of the first to the sixth embodiments, wherein the PVDF-based binder includes PVDF, polyvinylidene fluoride-co-hexafluoropropylene (PVDF-HFP) or a mixture thereof.

According to the eighth embodiment of the present disclosure, there is provided the conductive material master batch as defined in any one of the first to the seventh embodiments, which includes 20-70 parts by weight of the conductive material, 5-60 parts by weight of the PVDF-based binder and 0.1-50 parts by weight of the PTFE binder.

In another aspect of the present disclosure, there is provided an electrode according to any one of the following embodiments.

According to the ninth embodiment of the present disclosure, there is provided an electrode including:

a current collector; and
an electrode active material layer formed on at least one surface of the current collector,
wherein the electrode active material layer includes an electrode active material, an electrode conductive material and an electrode binder, the electrode binder is fibrilized to accomplish the binding of the electrode active material and the electrode conductive material, and the electrode has an electrode resistance of 55 ohm·cm or less.

According to the tenth embodiment of the present disclosure, there is provided the electrode as defined in the ninth embodiment, wherein the content of the electrode conductive material is 1 wt% or less based on the total weight of the electrode active material layer.

According to the eleventh embodiment of the present disclosure, there is provided the electrode as defined in the ninth or the tenth embodiment, wherein the electrode binder has a crystallization degree of 15% or less.

According to the twelfth embodiment of the present disclosure, there is provided the electrode as defined in any one of the ninth to the eleventh embodiments, wherein the content of the electrode active material is 95 wt% or more based on the total weight of the electrode active material layer.

According to the thirteenth embodiment of the present disclosure, there is provided the electrode as defined in any one of the ninth to the twelfth embodiments, wherein the electrode conductive material includes a carbonaceous material having a BET specific surface area of 80 $m^2/g$ or more.

According to the fourteenth embodiment of the present disclosure, there is provided the electrode as defined in any one of the ninth to the thirteenth embodiments, wherein the electrode conductive material includes carbon nanotubes alone, or carbon nanotubes and a dot-like conductive material.

According to the fifteenth embodiment of the present disclosure, there is provided the electrode as defined in any one of the ninth to the fourteenth embodiments, wherein the electrode conductive material includes carbon nanotubes and a dot-like conductive material, and the dot-like conductive material is carbon black, activated carbon, graphite, or a mixture of two or more of them.

According to the sixteenth embodiment of the present disclosure, there is provided the electrode as defined in any one of the ninth to the fifteenth embodiments, wherein the weight ratio of the carbon nanotubes to the dot-like conductive material is 100:0-10:90.

According to the seventeenth embodiment of the present disclosure, there is provided the electrode as defined in any one of the ninth to the sixteenth embodiments, wherein the electrode conductive material and the electrode binder include those derived from the conductive material master batch as defined in any one of the first to the eighth embodiments.

In still another aspect of the present disclosure, there is provided a method for preparing a conductive material master batch according to any one of the following embodiments.

According to the eighteenth embodiment of the present disclosure, there is provided a method for preparing a conductive material master batch, including the steps of:

> preparing a mixture by mixing a conductive material, a PVDF-based binder and a PTFE binder;
> forming an extrudate by kneading and extruding the mixture; and
> pulverizing the extrudate,
> wherein the conductive material has a BET specific surface area of 80 $m^2/g$ or more, and each of the PVDF-based binder and the PTFE binder in the resultant conductive material master batch independently has a crystallization degree of 30% or less.

According to the nineteenth embodiment of the present disclosure, there is provided the method for preparing a conductive material master batch as defined in the eighteenth embodiment, wherein the step of preparing a mixture is carried out by mixing the ingredients at 200-1,700 rpm for 1-30 minutes.

According to the twentieth embodiment of the present disclosure, there is provided the method for preparing a conductive material master batch as defined in the eighteenth or the nineteenth embodiment, wherein the step of forming an extrudate is carried out by introducing the mixture to a twin screw extruder and melt kneading the mixture at an extrusion temperature of 100-300°C at a screw speed of 50-600 rpm to perform extrusion of the mixture through a die.

According to the twenty-first embodiment of the present disclosure, there is provided the method for preparing a conductive material master batch as defined in any one of the eighteenth to the twentieth embodiments, wherein the pulverization is carried out at 500-20,000 rpm for 5 seconds to 10 minutes.

In still another aspect of the present disclosure, there is provided a method for manufacturing an electrode according to any one of the following embodiments.

According to the twenty-second embodiment of the present disclosure, there is provided a method for manufacturing an electrode, including the steps of:

> preparing a mixture by mixing a conductive material with a first binder;
> forming an extrudate by kneading and extruding the mixture;
> pulverizing the extrudate to obtain a conductive material master batch; and
> forming an electrode active material layer on at least one surface of a current collector from a mixture containing an electrode active material, the conductive material master batch and a second binder.

According to the twenty-third embodiment of the present disclosure, there is provided the method for manufacturing an electrode as defined in the twenty-second embodiment, wherein the step of forming an electrode active material layer includes the steps of:

preparing a mixture by mixing an electrode active material, the conductive material master batch and the second binder;

kneading the resultant mixture at a high temperature and under a low shear rate to obtain mixture lumps;

pulverizing the mixture lumps at a high shear rate to obtain a mixed powder for an electrode;

calendering the mixed powder for an electrode to obtain a mixture film; and

disposing the mixture film on at least one surface of a current collector and carrying out lamination.

According to the twenty-fourth embodiment of the present disclosure, there is provided the method for manufacturing an electrode as defined in the twenty-second or the twenty-third embodiment, wherein the first binder has a crystallization degree of 30% or less.

According to the twenty-fifth embodiment of the present disclosure, there is provided the method for manufacturing an electrode as defined in any one of the twenty-second to the twenty-fourth embodiments, wherein the mixture film has a tensile strength of 0.2 MPa or more.

According to the twenty-sixth embodiment of the present disclosure, there is provided the method for manufacturing an electrode as defined in any one of the twenty-second to the twenty-fifth embodiments, wherein the resultant electrode has an electrode resistance of 55 ohm·cm or less.

In yet another aspect of the present disclosure, there is provided an electrochemical device according to the following embodiment.

According to the twenty-seventh embodiment of the present disclosure, there is provided an electrochemical device including a positive electrode, a negative electrode and a separator layer interposed between the positive electrode and the negative electrode, wherein at least one of the positive electrode and the negative electrode is the electrode as defined in any one of the ninth to the seventeenth embodiments.

## Advantageous Effects

According to some embodiments of the present disclosure, it is possible to provide a conductive material master batch which uses a conductive material having a large BET specific surface area and shows excellent adhesion to an active material in manufacturing an electrode. In addition, the conductive material master batch according to some embodiments of the present disclosure can provide an effect of significantly improving the dispersibility of a conductive material having a large BET specific surface area.

According to another aspect of the present disclosure, it is possible to provide an electrode showing a reduced resistance, particularly, reduced electrode resistance. Particularly, the electrode according to an aspect of the present disclosure is one (i.e. a dry electrode) using no solvent during the manufacture thereof. Therefore, it is possible to provide a dry electrode using a reduced content of conductive material as compared to a conventional dry electrode, and thus having an increased content of electrode active material.

According to still another aspect of the present disclosure, it is possible to provide a dry electrode which shows an improved electrode resistance and improved electrode film strength, and thus has excellent electrical performance and improved stability, as well as to provide an electrochemical device using the dry electrode.

According to still another aspect of the present disclosure, it is possible to provide a dry electrode, which minimizes fine division of an electrode active material, maximizes fibrilization of a binder and minimizes cutting of a fibrilized binder, by introducing a process including a high-temperature low-shear kneading step, followed by pulverizing, instead of a high-shear mixing process.

Further, it is possible to provide a method for manufacturing an electrode which does not use a high-shear jet-milling step but uses a kneading step through a kneader and a pulverization step to avoid the problem of the blocking of a flow path caused by aggregation of the ingredients forming the electrode, and thus is favorable to mass production of electrodes.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 shows photographic images illustrating Examples 1-3 and Comparative Examples 1 and 2 disclosed herein.

FIG. 2 shows scanning electron microscopic (SEM) images illustrating Examples 1-3 and Comparative Examples 1 and 2 disclosed herein.

FIG. 3 is a schematic view illustrating the process for manufacturing a mixture film according to an embodiment of the present disclosure.

FIG. 4 is a schematic view illustrating the electrode lamination process according to an embodiment of the present disclosure.

BEST MODE

Hereinafter, preferred embodiments of the present disclosure will be described in detail with reference to the accompanying drawings.

The present disclosure relates to a conductive material master batch for use in a dry electrode obtained by pressurizing a mixed powder for an electrode, an electrode obtained by using the same, a method for preparing the conductive material master batch and a method for manufacturing the electrode.

According to the present disclosure, the dry electrode may be used as an electrode for an electrochemical device, such as a lithium-ion secondary battery, but the use according to the present disclosure is not limited thereto.

According to the present disclosure, the term 'BET specific surface area' refers to a specific surface area determined by the BET method, wherein the BET specific surface area is a value calculated from the nitrogen gas adsorption at the temperature (77K) of liquid nitrogen measured by using TriStar II 3020 system available from Micromeritics Instruments Corporation.

As used herein, the term 'melting point' refers to a value measured by a conventional method for measuring the melting point (Tm) of a polymer. For example, the melting point may be measured by using a differential scanning calorimeter (DSC).

As used herein, the term 'crystallization degree' is a measure for predicting the kneadability and fibrilization degree of a polymer, and may be determined by using a differential scanning calorimeter (DSC), or the like.

As used herein, the term 'diameter ($D_{50}$)' means the particle diameter at the point of 50% in the particle volume accumulated distribution as a function of particle diameter. The particle diameter may be determined by using the laser diffraction method. Particularly, a material to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, $D_{50}$ may be determined by calculating the particle diameter at the point of 50% in the particle volume accumulated distribution depending on particle diameter in the analyzer system.

As used herein, the term 'CNT dispersibility' refers to the property of CNT dispersing in the form of nanofibers without clumping into bundles. For example, the CNT dispersibility may be evaluated by the method of SEM shape analysis.

Conductive Material Master Batch

In one aspect of the present disclosure, there is provided a conductive material master batch which allows application of a conductive material having a large BET specific surface area to a dry electrode.

The conductive material master batch according to an aspect of the present disclosure includes a conductive material, a polyvinylidene fluoride (PVDF)-based binder, and a polytetrafluoroethylene (PTFE) binder, wherein the conductive material has a BET specific surface area of 80 $m^2$/g or more, and each of the PVDF-based binder and the PTFE binder independently has a crystallization degree of 30% or less.

According to the present disclosure, the conductive material has a BET specific surface area of 80 $m^2$/g or more. When using such a conductive material having a BET specific surface area of 80 $m^2$/g or more, it is possible to reduce the content of the conductive material and to increase the content of an active material, thereby accomplishing a function of increasing the capacity of a dry electrode, but the function of the conductive material is not limited thereto.

According to an aspect of the present disclosure, the conductive material is not particularly limited, as long as it has a BET specific surface area of 80 $m^2$/g or more and has conductivity, while not causing any chemical change in the corresponding battery. Particular examples of the conductive material include: graphite, such as natural graphite or artificial graphite; carbon black, such as acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide; conductive material, such as a polyphenylene derivative; or the like. Particularly, with a view to homogeneous mixing of the conductive material and improvement of the conductivity, the conductive material may be carbon nanotubes, activated carbon, graphite, carbon black or a mixture thereof.

According to some embodiments of the present disclosure, the conductive material may include carbon nanotubes alone.

According to other embodiments of the present disclosure, the conductive material may include carbon nanotubes and a dot-like conductive material. According to some embodiments of the present disclosure, the dot-like conductive material may include carbon black, activated carbon, graphite, or a mixture of two or more of them.

According to still other embodiments of the present disclosure, the conductive material may include carbon nanotubes and a dot-like conductive material at a weight ratio of 100:0-10:90. Herein, when the weight ratio of the carbon nanotubes to the dot-like conductive material is 100:0, it means that the conductive material includes carbon nanotubes alone.

According to still other embodiments of the present disclosure, the conductive material may include carbon nanotubes and a dot-like conductive material, and the weight ratio of the carbon nanotubes to the dot-like conductive material may be 99:1-50:50.

According to still other embodiments of the present disclosure, when the conductive material includes carbon nanotubes, the carbon nanotubes may be dispersed in the form of nanofibers by the PVDF-based binder and the PTFE binder in the conductive material master batch.

Particularly, according to some embodiments of the present disclosure, the conductive material may have a BET specific surface area of 80-2,000 $m^2/g$. More particularly, the conductive material may have a BET specific surface area of 100 $m^2/g$ or more, 150 $m^2/g$ or more, 160 $m^2/g$ or more, 500 $m^2/g$ or more, 1,000 $m^2/g$ or more, 2,000 $m^2/g$ or less, 1,500 $m^2/g$ or less, 1400 $m^2/g$ or less, 300 $m^2/g$ or less, 250 $m^2/g$ or less, or 210 $m^2/g$ or less. According to other embodiments of the present disclosure, the conductive material may include carbon nanotubes having a BET specific surface area of 80-300 $m^2/g$ and a dot-like conductive material having a BET specific surface area of 100-2,000 $m^2/g$. When the conductive material has the above-defined range of specific surface area, there is an advantageous effect in terms of the dispersion stability of the conductive material in the conductive material master batch, but the scope of the present disclosure is not limited thereto.

According to still other embodiments of the present disclosure, when the conductive material includes carbon nanotubes, the carbon nanotubes may have a diameter of 0.1-50 nm, 1-30 nm, 5-25 nm, 10-20 nm, or 10-15 nm. As used herein, the diameter of carbon nanotubes refers to a value of diameter measured at the cross-section orthogonal to the longitudinal direction of carbon nanotubes. For example, the diameter may be determined by observing the carbon nanotubes with an electronic microscope, such as a scanning electron microscope (SEM). When the diameter of carbon nanotubes falls within the above-defined range, it is possible to realize an advantageous effect in terms of CNT dispersibility, but the scope of the present disclosure is not limited thereto.

The conductive material master batch according to some embodiments of the present disclosure includes a PVDF-based binder and a PTFE binder, in combination with the conductive material.

According to some embodiments of the present disclosure, the conductive material master batch includes a PVDF-based binder as a binder, and thus can realize an advantageous effect in terms of improvement of the binding force with the conductive material. In this manner, it is possible to reduce the content of the binder in the conductive material master bath and to increase the content of conductive material, but the function of the PVDF-based binder is not limited thereto.

According to some embodiments of the present disclosure, the conductive material master batch may be used for a dry electrode in which a dry film is formed through a binder fibrilization process. Herein, when the conductive material master batch includes the PTFE binder, it is possible to realize an advantageous effect in terms of the formation of an electrode film through a binder fibrilization process, but the function of the PTFE binder is not limited thereto.

According to some embodiments of the present disclosure, the conductive material master batch includes the PVDF-based binder and the PTFE binder, and thus can provide excellent binding force with the conductive material and can realize an effect of improving the dispersibility of the conductive material having a high specific surface area. Further, when forming an electrode film by using the conductive material master batch through a binder fibrilization process, it is possible to form an electrode film stably and to realize an electrode having a low electrode resistance, but the mechanism of the present disclosure is not limited thereto.

According to some embodiments of the present disclosure, the PVDF-based binder may include a PVDF-based binder having a melting point of 200°C or lower. When the PVDF-based binder used herein is a PVDF-based binder having a melting point of 200°C or lower, it is possible to improve the dispersibility and dispersion stability of the conductive material in a molten state and to allow preparation of a master batch, but the function of the PVDF-based binder is not limited thereto.

According to some embodiments of the present disclosure, the PVDF-based binder may be any polymer, as long as it has a melting point of 200°C or lower and contains at least one polyvinylidene fluoride repeating unit in its repeating units. For example, the PVDF-based binder may include PVDF, polyvinylidene fluoride-co-hexafluoropropylene (PVDF-HFP) or a mixture thereof.

According to some embodiments of the present disclosure, particularly, the PVDF-based binder may have a melting point of 100-200°C. For example, the PVDF-based binder may have a melting point of 100°C or higher, 120°C or higher, 140 or higher, 150°C or higher, 160°C or higher, 200°C or lower, 190°C or lower, 185°C or lower, or 180°C or lower. In a variant, the PVDF-based binder may have a melting point of 100°C or higher, 110°C or higher, 120°C or higher, 200°C or lower, 190°C or lower, 180°C or lower, 170°C or lower, 160°C or lower, 150°C or lower, or 140°C or lower.

According to some embodiments of the present disclosure, the PTFE binder may include a PTFE binder having a melting point of 300-380°C. When the PTFE binder used herein is a PTFE binder having a melting point of 300-380°C, it is possible to improve the dispersibility and dispersion stability of the conductive material in a molten state and to allow preparation of a master batch, but the function of the PTFE binder is not limited thereto.

According to some embodiments of the present disclosure, the PTFE binder may be any polymer, as long as it has a melting point of 300-380°C and contains at least one polytetrafluoroethylene (PTFE) repeating unit in its repeating units.

According to some embodiments of the present disclosure, the PTFE binder may include polytetrafluoroethylene (PTFE).

According to some embodiments of the present disclosure, particularly, the PTFE binder may have a melting point of 300°C or higher, 310°C or higher, 320°C or higher, 330°C or higher, 335°C or higher, 380°C or lower, 370°C or lower, 360°C or lower, or 355°C or lower.

According to some embodiments of the present disclosure, each of the PVDF-based binder and the PTFE binder contained in the conductive material master batch may independently have a crystallization degree of 30% or less.

Herein, the crystallization degree of the binder may be a value determined by using differential scanning calorimetry (DSC). Particularly, 5-12 mg of a sample is introduced to a differential scanning calorimeter (DSC), the melting point and heat of melting ($\Delta Hm$) are determined, while the temperature is increased at a rate of 10°C/min within a temperature range of 25-360°C under nitrogen atmosphere, and the crystallization degree may be determined according to the following formula based on the heat of crystal fusion ($\Delta Hm°$) depending on the type of a binder:

$$\text{Crystallization degree of binder } (Xc) = (\triangle Hm / \triangle Hm°) \times 100 \, (\%)$$

In the above formula, with reference to the heat of crystal fusion ($\Delta Hm°$) of the binder, the heat of 100% crystal fusion ($\Delta Hm°$) of the PVDF binder is 105 J/g, the heat of 100% crystal fusion ($\Delta Hm°$) of the PVDF-HFP binder is 80 J/g, and the heat of 100% crystal fusion ($\Delta Hm°$) of the PTFE binder is 85.4 J/g, or the crystallization degree of each binder may be calculated by referring to other values known in documents.

According to some embodiments of the present disclosure, when the PVDF-based binder includes PVDF, the crystallization degree of PVDF in the conductive material master batch may be 30% or less, 28% or less, 27% or less, 26.5% or less, 26% or less, 25% or less, or 0%, more particularly.

According to some embodiments of the present disclosure, when the PVDF-based binder includes PVDF-HFP, the crystallization degree of PVDF-HFP may be 30% or less, 20% or less, 15% or less, 10% or less, 8% or less, 6% or less, or 0%, more particularly.

According to still other embodiments of the present disclosure, the crystallization degree of the PTFE binder may be 30% or less, 25% or less, 20% or less, 15% or less, 10% or less, 5% or less, or 0%, more particularly.

According to still other embodiments of the present disclosure, the PVDF-based binder may have a crystallization degree of 30% or less, and the PTFE binder may have a crystallization degree of 30% or less.

According to still another embodiment of the present disclosure, the PVDF-based binder may have a crystallization degree of 30% or less, and the PTFE binder may have a crystallization degree of 20% or less.

According to some embodiments of the present disclosure, when the crystallization degree of the PVDF-based binder satisfies the above-defined range, there is an advantageous effect in terms of improvement of the dispersibility and dispersion stability of CNT, but the scope of the present disclosure is not limited thereto.

According to some embodiments of the present disclosure, when the crystallization degree of the PTFE binder satisfies the above-defined range, there is an advantageous effect in terms of improvement of the physical properties of an electrode obtained by using the conductive material master batch, but the scope of the present disclosure is not limited thereto.

According to some embodiments of the present disclosure, the conductive material master batch includes 20-70 parts by weight of the conductive material, 5-60 parts by weight of the PVDF-based binder, and larger than 0 to 50 parts by weight of the PTFE binder. Particularly, the conductive material master batch may include 20-70 parts by weight of the conductive material, 5-60 parts by weight of the PVDF-based binder and 0.1-50 parts by weight of the PTFE binder. For example, the conductive material master batch may include 40-70 parts by weight of the conductive material, 40-50 parts by weight of the PVDF-based binder and 5-30 parts by weight of the PTFE binder. More particularly, the conductive material master batch may include 50-60 parts by weight of the conductive material, 30-40 parts by weight of the PVDF-based binder and 10-20 parts by weight of the PTFE binder.

According to some embodiments of the present disclosure, when the content ratio of the conductive material, the PVDF-based binder and the PTFE binder in the conductive material master batch satisfies the above-defined range, it is possible to significantly improve the dispersibility of the conductive material when mixing the conductive material master batch with an active material, to improve the ratio of the active material to the conductive material, and to realize excellent adhesion of the conductive material with the active material, but the scope of the present disclosure is not limited thereto.

According to some embodiments of the present disclosure, the conductive material master batch may further include a polyolefin binder, besides the PVDF-based binder and the PTFE binder.

According to still other embodiments of the present disclosure, the conductive material master batch may further include an active material without adversely affecting the objects of the present disclosure, besides the above-described ingredients.

Electrode

In another aspect of the present disclosure, there is provided an electrode including: a current collector; and an electrode active material layer formed on at least one surface of the current collector, wherein the electrode active material layer includes an electrode active material, an electrode conductive material and an electrode binder, the electrode binder is fibrilized to accomplish the binding of the electrode active material and the electrode conductive material, and the electrode has an electrode resistance of 55 ohm·cm or less.

The electrode according to some embodiments of the present disclosure may be obtained by using the above-described conductive material master batch.

According to some embodiments of the present disclosure, the electrode may include a fibrilized electrode binder as a means for binding an electrode active material with an electrode conductive material. Such a fibrilized electrode binder shows less cleavage as compared to a conventional non-fibrilized binder and has an excellent elongation property in the longitudinal direction, and thus can improve the flexibility of an electrode active material layer and an electrode including the same itself. The fibrilization process of the electrode binder will be explained in more detail in the following method for manufacturing electrode.

According to some embodiments of the present disclosure, the electrode active material layer may be derived from a free standing-type electrode film. For example, the electrode may include a current collector, and an electrode active material layer disposed on at least one surface of the current collector and derived from an electrode film. In addition, the electrode film may be bound with the current collector through a lamination process, or the like.

According to some embodiments of the present disclosure, the electrode active material layer is an electrode film, and may be prepared in the form of a free standing-type sheet by using electrode materials, including an electrode conductive material and an electrode binder, without introducing any solvent. As used herein, the term 'free standing-type' refers to an object which can maintain its own shape without relying on other members and can be transferred or handled by itself.

As described hereinafter, the electrode active material layer may be formed by compressing a mixed powder for an electrode. For example, the electrode active material layer may have a shape of layered structure formed by integration of the mixed powder for an electrode through compression. The mixed powder for an electrode is a powdery electrode material containing an electrode active material, an electrode conductive material and an electrode binder. For example, as described hereinafter, the mixed powder for an electrode may be obtained by pulverizing mixture lumps containing the electrode active material, the electrode conductive material and the electrode binder.

According to the present disclosure, the electrode shows a resistance of 55 ohm·cm or less.

Herein, the electrode resistance may refer to a value determined as follows. As an electrode to be tested in terms of resistance, an electrode having a size of 50 x 50 mm$^2$ is prepared. The prepared electrode sample is introduced to Multi-probe Tester (HIOKI, RM2610), the potential difference is measured among the probes (45 probes) under the conditions of a current at the positive electrode of 100 μA, current at the negative electrode of 10 mA and a voltage of 0.5 V, and the measured value is provided as an electrode resistance value.

Since the conventional method for manufacturing a dry electrode uses no solvent, there is a problem in that the conductive material shows poor dispersibility. Particularly, since a conductive material having a large BET specific surface area is not dispersed stably, it is not suitable for manufacturing a dry electrode, undesirably. Therefore, there have been some attempts to use a conductive material having a small BET specific surface area, while increasing the content thereof, so that the resultant electrode may have improved electrical characteristics. However, when increasing the content of the conductive material, the content of an active material is reduced to cause degradation of the electrode capacity, and the content of a binder is also reduced to cause degradation of current collection with a current collector and a decrease in binding force of the active material particles among themselves, thereby causing the problem of an increase in the electrode resistance.

According to some embodiments of the present disclosure, the electrode active material layer shows improved dispersibility of a conductive material having a large BET specific surface area. Therefore, it is possible to significantly reduce the electrode resistance value, even though a small amount of conductive material is used, thereby providing a dry electrode having improved electrical characteristics. However, the mechanism of the present disclosure is not limited thereto.

According to some embodiments of the present disclosure, the content of the electrode conductive material may be 1 wt% or less based on the total weight of the electrode active material layer. Particularly, the content of the electrode conductive material may be 0.1-1 wt% or 0.1-0.8 wt% based on the total weight of the electrode active material layer.

Therefore, according to some embodiments of the present disclosure, it is possible to increase the content of the electrode active material in the electrode active material layer. According to some embodiments of the present disclosure, the content of the electrode active material may be 95 wt% or more, 96 wt% or more, 97-99 wt%, 97-98 wt%, or 97-97.5 wt%, based on the total weight of the electrode active material layer.

As such, according to some embodiments of the present disclosure, it is possible to realize an effect of improving the electrode resistance value, while reducing the content of the electrode conductive material in the electrode active material layer. For example, the electrode resistance value may be 55 ohm·cm or less, while the electrode includes the conductive material in an amount of 0.8 wt% or less based on the total weight of the electrode active material layer.

Particularly, the electrode may provide a resistance value of 45 ohm·cm or less, as expressed by 1 wt% of the content of the conductive material in the electrode active material layer according to the following Formula 1:

$$[\text{Formula 1}]$$

$$Rt = Cw \times Rw$$

wherein Rt represents an electrode resistance value expressed by 1 wt% of the content of the conductive material in the electrode active material layer, Cw represents the content of the conductive material based on the total weight of the electrode active material layer in the target electrode, and Rw represents the electrode resistance value of the target electrode.

As described above, according to some embodiments of the present disclosure, the conductive material and the binder contained in the electrode may be derived from the above-mentioned conductive material master batch.

In other words, 'electrode conductive material' may be 'conductive material' described hereinabove with reference to the conductive material master batch. Therefore, reference will be made to the above description about the conductive material in the conductive material master batch with reference to 'electrode conductive material'.

In addition, 'electrode binder' may include 'binder' described hereinabove with reference to the conductive material master batch. Therefore, reference will be made to the above description about the binder in the conductive material master batch with reference to 'electrode binder'.

For example, the electrode conductive material may have a BET specific surface area of 80 m$^2$/g or more.

In addition, the electrode conductive material may include carbon nanotubes alone, or carbon nanotubes and a dot-like conductive material. Herein, reference will be made to the above description about the type of the dot-like conductive material and the weight ratio of the carbon nanotubes to the dot-like conductive material.

The electrode according to some embodiments of the present disclosure includes an electrode active material layer provided by using the above-described conductive material master batch, and thus shows improved dispersibility of a conductive material having a large BET specific surface area and allows the conductive material having a large BET specific surface area to be incorporated stably to the formation of the electrode active material layer. In this manner, it is possible to reduce the content of the conductive material in the electrode active material layer and to increase the content of the active material, thereby providing the electrode with improved resistance characteristics.

In addition, the electrode binder may include the PVDF-based binder and the PTFE binder derived from the conductive material master batch.

Further, the electrode binder is not particularly limited, as long as it can be fibrilized in the following step, particularly, the step for preparing mixture lumps. Herein, 'fibrilization' refers to fine division of a polymer, and may be carried out by using mechanical shear force, or the like. The polymer fibers fibrilized in this manner generates a lot of microfibers (fibrils) through the disentanglement of the surface.

According to some embodiments of the present disclosure, non-limiting examples of the electrode binder may include polytetrafluoroethylene (PTFE), polyolefin or a mixture thereof. Particularly, the electrode binder may be polytetrafluoroethylene (PTFE). More particularly, the polytetrafluoroethylene (PTFE) may be present in an amount of 60 wt% or more, based on the total weight of the binder polymer. Meanwhile, herein, the binder ingredient may further include at least one of polyethylene oxide (PEO), polyvinylidene fluoride (PVDF), polyvinylidene fluoride-co-hexafluoropropylene (PVDF-HFP) and polyolefin-based polymers.

According to some embodiments of the present disclosure, the binder polymer contained in the electrode active material layer may be one (i.e. a second binder) introduced for preparing a mixed powder for an electrode, or may be one (i.e. a first binder) introduced for preparing the conductive material master batch, as described in the following method for manufacturing an electrode.

According to some embodiments of the present disclosure, the electrode binder may have a crystallization degree of 15% or less, particularly 10% or less.

According to some embodiments of the present disclosure, the electrode binder may include one derived from the conductive material master batch. For example, the conductive material master batch may include a PVDF-based binder polymer and a PTFE binder polymer, and each of them may independently have a crystallization degree of 30% or less. In other words, the binder contained in the conductive material master batch may include one having a crystallization degree of 30% or less and showing a decrease in crystallization degree to 15% or less, while the binder is further fibrilized through the kneading step in preparing a mixed powder for an electrode by using the binder.

According to some embodiments of the present disclosure, when the crystallization degree of the PTFE binder satisfies the above-defined range, there is an advantageous effect in terms of improvement of the physical properties of the electrode obtained by using the conductive material master batch, but the scope of the present disclosure is not limited thereto.

According to some embodiments of the present disclosure, the content of the electrode binder may be 0.1-5 wt%, 0.1-4 wt%, 0.1-3 wt%, or 0.1-2.5 wt%, based on the total weight of the electrode active material layer, but the scope of the present disclosure is not limited thereto.

According to some embodiments of the present disclosure, the electrode active material layer may include a positive electrode active material or a negative electrode active material, depending on the polarity of the electrode.

Non-limiting examples of the positive electrode active material include, but are not limited to: lithium transition metal oxides; lithium metal iron phosphates, lithium nickel-manganese-cobalt oxides; lithium nickel-manganese-cobalt oxides partially substituted with other transition metals; or two or more of them. Particular examples of the positive electrode active material may include, but are not limited to: layered compounds, such as lithium cobalt oxide ($LiCoO_2$) and lithium nickel oxide($LiNiO_2$), or those compounds substituted with one or more transition metals; lithium manganese oxides, such as $Li_{1+x}Mn_{2-x}O_4$ (wherein x is 0-0.33), $LiMnO_3$, $LiMn_2O_3$ and $LiMnO_2$; lithium coper oxide ($Li_2CuO_2$); vanadium oxides, such as $LiV_3O_8$, $LiV_3O_4$, $V_2O_5$ or $Cu_2V_2O_7$; Ni site-type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; lithium metal phosphates $LiMPO_4$ (wherein M is Fe, CO, Ni or Mn); lithium nickel-manganese-cobalt oxides $Li_{1+x}(Ni_aCo_bMn_c)_{1-x}O_2$ (x is 0-0.03, a is 0.3-0.95, b is 0.01-0.35, c is 0.01-0.5, a + b + c = 1); lithium nickel-manganese-cobalt oxides partially substituted with aluminum $Li_a[Ni_bCo_cMnaAl_e]_{1-f}M1_fO_2$ (wherein M1 is at least one selected from the group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$); lithium nickel-manganese-cobalt oxides partially substituted with another transition metal $Li_{1+x}(Ni_aCo_bMn_cM_a)_{1-x}O_2$ (wherein x is 0-0.03, a is 0.3-0.95, b is 0.01-0.35, c is 0.01-0.5, d is 0.001-0.03, a + b + c + d = 1, and M is any one selected from the group consisting of Fe, V, Cr, Ti, W, Ta, Mg and Mo); disulfide compounds; $Fe_2(MoO_4)_3$; or the like.

Non-limiting examples of the negative electrode active material include: carbon, such as non-graphitizable carbon or graphite-based carbon; metal composite oxides, such as $Li_xFe_2O_3$ ($0 \leq x \leq 1$), $Li_xWO_2$ ($0 \leq x \leq 1$) and $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon-based alloy; tin-based alloy; silicon-based oxides, such as SiO, SiO/C and $SiO_2$; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; and conductive polymers, such as polyacetylene; Li-Co-Ni-based materials, or the like.

According to some embodiments of the present disclosure, the current collector is not particularly limited, as long as it has high conductivity, while not causing any chemical change in the corresponding battery. Particular examples of the current collector include stainless steel, aluminum, nickel, titanium, baked carbon, copper, aluminum or stainless steel surface-treated with carbon, nickel, titanium, silver, etc., aluminum-cadmium alloy, or the like. In addition, fine surface irregularities may be formed on the surface of the current collector to enhance the binding force of the electrode active material. Further, the current collector may have various shapes, such as a film, a sheet, a foil, a net, a porous body, a foam or non-woven web body, or the like.

According to some embodiments of the present disclosure, the current collector may be totally or partially coated with a conductive primer for reducing the surface resistance and improving the adhesion. Herein, the conductive primer may include a conductive material and a binder, wherein the conductive material is not particularly limited, as long as it has conductivity. For example, the conductive material may be a carbonaceous material. The binder may include a fluorine-based binder (including PVDF and PVDF copolymer), acryl-based binder and an aqueous binder that can be dissolved in a solvent, or the like.

Method for Preparing Conductive Material Master Batch

In still another aspect of the present disclosure, there is provided a method for preparing the above-described conductive material master batch.

The method for preparing a conductive material master batch according to some embodiments of the present disclosure includes the steps of: preparing a mixture by mixing a conductive material, a PVDF-based binder and a PTFE binder; forming an extrudate by kneading and extruding the mixture; and pulverizing the extrudate, wherein the conductive material has a BET specific surface area of 80 m$^2$/g or more, and each of the PVDF-based binder and the PTFE binder in the resultant conductive material master batch independently has a crystallization degree of 30% or less.

In the method for preparing a conductive material master batch according to the present disclosure, reference will be made to the above description of the conductive material master batch with reference to the conductive material, the PVDF-based binder and the PTFE binder.

According to some embodiments of the present disclosure, the step of preparing a mixture by mixing the conductive material, the PVDF-based binder and the PTFE binder is carried out in such a manner that the conductive material, the PVDF-based binder and the PTFE binder may be distributed homogeneously. Since the above ingredients are mixed in the form of powder, the mixing may be carried out by using various processes with no particular limitation, as long as the ingredients can be mixed simply. The conductive material master batch may be mixed through dry mixing, and the mixing may be carried out by introducing the above ingredients to an instrument, such as a blender or a super-mixer.

According to some embodiments of the present disclosure, the step of preparing a mixture may be carried out in a super-mixer at 200-1,700 rpm for 1-30 minutes. Particularly, the above ingredients may be mixed in the mixer at 1,000-1,500 rpm for 2-7 minutes.

The method for preparing a conductive material master batch includes a kneading and extrusion step for fibrilizing the binder in the mixture to prepare an extrudate from the mixture.

For example, according to some embodiments of the present disclosure, the step of forming an extrudate may be carried out by using a twin screw extruder. When forming the extrudate by using a twin screw extruder, it is possible for each of the PVDF-based binder and the PTFE binder in the resultant conductive material master batch to realize a crystallization degree of 30% or less.

According to some embodiments of the present disclosure, each screw in the twin screw extruder may have a diameter (Φ) of 10-40, 15-35, 20-30, particularly 25, and a ratio (L/D) of length (L)/diameter (D) of 40-60, 45-55, particularly 48.

Particularly, according to some embodiments of the present disclosure, the step of forming an extrudate may be carried out by introducing the mixture to the twin screw extruder, and carrying out melt kneading at an extrusion temperature of 100-300°C under a screw speed of 50-600 rpm to extrude the mixture through the die.

For example, according to some embodiments of the present disclosure, the extrusion temperature may be 130-230°C, or 140-220°C. According to some embodiments of the present disclosure, when the extrusion temperature is significantly lower than the above-defined range, formation of the mixture into lumps through the binder fibrilization and kneading cannot be accomplished sufficiently, and thus the extrudate may be compressed in the form of powder. When the extrusion temperature is significantly higher than the above-defined range, the crystallization degree of the binder is reduced rapidly and thermal decomposition may occur undesirably. However, the scope of the present disclosure is not limited thereto.

According to some embodiments of the present disclosure, the screw speed in the twin screw extruder may be 150-450 rpm, 300-450 rpm, 350-450 rpm, or 400 rpm.

According to some embodiments of the present disclosure, the die used in the extrusion may have a rectangular or circular shape, but the scope of the present disclosure is not limited thereto.

According to some embodiments of the present disclosure, the pulverization step is carried out by cutting the conductive material master batch to facilitate its mixing with the powdery active material in the subsequent process for manufacturing an electrode, and includes pulverizing the extrudate by a conventional process so that the extrudate may have a suitable size and shape with no particular limitation.

According to some embodiments of the present disclosure, the pulverization may be carried out by introducing the extrudate to a blender, and pulverizing the extrudate, for example, at 5,000-20,000 rpm for 10 seconds to 10 minutes. Particularly, the pulverization may be carried out at 8,000-15,000 rpm, or at 10,000rpm, for 20 seconds to 1 minute, or for 30 seconds.

The prepared conductive material master batch includes the conductive material dispersed homogeneously therein, and allows each of the PVDF-based binder and the PTFE binder introduced thereto to realize a crystallization degree of 30% or less.

The resultant conductive material master batch may be used for manufacturing an electrode, particularly, a dry electrode, but the use of the conductive material master batch is not limited thereto.

Method for Manufacturing Electrode

In still another aspect of the present disclosure, there is provided a method for manufacturing the above-described electrode.

The method for manufacturing an electrode according to some embodiments of the present disclosure includes the steps of: preparing a mixture by mixing a conductive material with a first binder; forming an extrudate by kneading and extruding the mixture; pulverizing the extrudate to obtain a conductive material master batch; and forming an electrode active material layer on at least one surface of a current collector from a mixture containing an electrode active material, the conductive material master batch and a second binder.

According to some embodiments of the present disclosure, reference will be made to the above description of the conductive material master batch with reference to the conductive material.

According to some embodiments of the present disclosure, reference will be made to the above description of the electrode with reference to each of the first binder and the second binder. For example, each of the first binder and the second binder may be independently any conventional type of binder used for manufacturing an electrode with no particular limitation.

According to some embodiments of the present disclosure, the first binder may be a binder used for the conductive material master batch, and particularly, may include a PVDF-based binder, a PTFE-based binder or a mixture thereof.

According to some embodiments of the present disclosure, the second binder may be a conventional binder used for manufacturing an electrode, and for example, may include a PVDF-based binder, a PTFE-based binder, a polyolefin binder, or a mixture of two or more of them.

The method for manufacturing an electrode according to some embodiments of the present disclosure may include a step of forming an electrode active material layer by using the above-described conductive material master batch. In other words, the method for manufacturing an electrode may be broadly divided into a process of preparing a conductive material master batch and a process of manufacturing an electrode by using the resultant conductive material master batch as a conductive material.

In this context, the first binder may be a binder used for the process of preparing a conductive material master batch, and the second binder may be an electrode binder used for the process of manufacturing an electrode by using the conductive material master batch.

In addition, the step of preparing a mixture, the kneading step and the pulverization step included in the process of preparing a conductive material master batch may be referred to as a first mixing step, a first kneading step and a first pulverization step, respectively. In addition, the step of preparing a mixture, the kneading step and the pulverization step in the process of manufacturing an electrode by using the conductive material master batch may be referred to as a second mixing step, a second kneading step and a second pulverization step, respectively.

According to some embodiments of the present disclosure, the method for manufacturing an electrode includes the above-mentioned process of preparing a conductive material master batch and process of forming an electrode active material layer.

According to some embodiments of the present disclosure, the process of manufacturing an electrode by using the conductive material master batch includes a step of forming an electrode active material layer containing an electrode active material, the conductive material master batch and the second binder polymer, on at least one surface of a current collector.

According to some embodiments of the present disclosure, the step of forming an electrode active material layer may include preparing a mixed powder for an electrode from an electrode active material, the conductive material master batch and a binder polymer (second binder), and then laminating a free standing-type electrode film obtained from the mixed powder for an electrode onto at least one surface of a current collector.

In still another aspect of the present disclosure, there is provided a method for manufacturing an electrode, including the steps of: preparing a mixture by mixing a conductive material with the first binder (first mixing step); kneading and extruding the mixture to obtain an extrudate (first kneading step); pulverizing the extrudate to obtain a conductive material master batch (first pulverization step); preparing a mixture by mixing an electrode active material, the conductive material master batch and the second binder (second mixing step); kneading the resultant mixture at a high temperature and under a low shear rate to obtain mixture lumps (second kneading step); pulverizing the mixture lumps at a high shear rate to obtain a mixed powder for an electrode (second pulverization step); calendering the mixed powder for an electrode to obtain a mixture film; and disposing the mixture film on at least one surface of a current collector, and carrying out lamination to obtain an electrode.

Reference will be made to the above description with reference to the step of preparing a mixture (first mixing step) to the step of preparing a conductive material master batch (first pulverization step).

The second mixing step, the second kneading step and the second pulverization step are included in the process of preparing a mixed powder for an electrode.

The mixed powder for an electrode is a powdery electrode material including an electrode active material, a conductive material and a binder. For example, as described hereinafter, the mixed powder for an electrode may be obtained by pulverizing mixture lumps containing an electrode active material, an electrode conductive material and an electrode binder. As used herein, the term 'mixed powder' refers to an aggregate formed by aggregation of two or more electrode material particles. Each individual electrode material particle forming the mixed powder includes the electrode active material, the conductive material and the binder.

The mixed powder for an electrode may be obtained as follows.

First, prepared is an electrode material mixture containing an electrode active material, the conductive material master batch prepared as described above and a binder polymer (second binder). The mixing step for preparing the mixture is carried out in such a manner that the electrode materials, including the electrode active material, the conductive material master batch and the electrode binder, may have a homogeneous disperse phase in the mixture. The electrode according to some embodiments of the present disclosure is provided as a dry electrode using no solvent, and thus the mixing step is carried out in a powder phase without introducing any solvent thereto. Therefore, the mixing may be carried out by using various processes with no particular limitation, as long as the electrode materials can be mixed simply. For example, the mixing step may be carried out by introducing the electrode materials to a known instrument, such as a mixer or a blender, and carrying out agitation.

Next, the resultant electrode mixture is subjected to a fibrilization step (second kneading step) in order to fibrilize the electrode binder. Herein, the binder refers to at least one of the first binder contained in the conductive material master batch and the second binder introduced additionally in preparing the mixed powder for an electrode. As the fibrilization process, mixing based on shear stress, such as a mechanical milling process or a kneading process, may be used.

According to some embodiments of the present disclosure, low-shear kneading may be used for the fibrilization step. For example, the kneading may be carried out through a kneader. The electrode binder is fibrilized by the kneading step, and the electrode materials, including the electrode active material, introduced in the form of powder are bound or interconnected by the fibrilized binder, thereby forming mixture lumps. Since the kneading is carried out without introducing any solvent, the mixture lumps may have a solid content of 100%.

According to some embodiments of the present disclosure, the kneading may be carried out at a rate controlled to 10-100 rpm. For example, the kneading may be carried out at a rate controlled to 40-70 rpm, within the above-defined range. The kneading may be carried out for 1-10 minutes. For example, the kneading may be carried out at speed of 40-70 rpm for 3-7 minutes, within the above-defined ranges.

More preferably, the kneading may be carried out within 5 minutes, or within 3 minutes. The lower the tap compression ratio of the resultant mixed powder for an electrode is, the higher the processability of the manufacture of an electrode film using the powder is. In addition, the tap compression is reduced in the early stage of kneading, and then undergoes little change after a certain time point. When the kneading time falls within the above-defined range, there is a preferred effect in terms of a suitable degree of fibrilization and tensile strength of the fibrilized binder polymer, but the scope of the present disclosure is not limited thereto.

Meanwhile, the kneading in the second kneading step may be carried out at a shear rate controlled to a range of 10/s to 500/s. According to some embodiments of the present disclosure, the kneading may be carried out for 1-30 minutes, and the shear rate may be controlled to a range of 30/s to 100/s.

In addition, the kneading step may be carried out under the condition of a high temperature and a pressure equal to or higher than the ambient pressure. Particularly, the kneading step may be carried out under a pressure equal to or higher than the ambient pressure. More particularly, the kneading step may be carried out at 50-230°C, specifically 90-200°C. When the kneading step is carried out under the above-defined condition, there is a preferred effect in terms of the degree of fibrilization of the binder polymer, lumping of the introduced materials, easy filming of an electrode film and the tensile strength of an electrode film, but the scope of the present disclosure is not limited thereto.

In addition, the kneading step may be carried out under a pressure equal to or higher than the ambient pressure, particularly under a pressure of 1-60 atm, 1-30 atm, 1-10 atm, 1.1-10 atm, 1.1-6 atom, or 1.1-3 atm. When carrying out the kneading under the above-defined condition, there is a preferred effect in terms of the fiber crystallization degree and mixture lump density. According to some embodiments of the present disclosure, when carrying out a low-shear mixing process under the condition of a high temperature and a pressure equal to or higher than the ambient pressure, instead of high-shear mixing, it is possible to accomplish the desired effects of the present disclosure, but the scope of the present disclosure is not limited thereto.

Then, the mixture lumps obtained from the kneading step (second kneading step) is pulverized to obtain a powdery electrode mixture (second pulverization step).

The mixture lumps obtained through the kneading may be directly subjected to pressurization (calendering) to be molded in the form of a sheet. However, in this case, it is required to apply a high pressure and high temperature to the mixture lumps in order to mold them to a target thickness. As a result, there are problems in that the dry film may have excessively high density, or a uniform film cannot be obtained. Therefore, according to the present disclosure, the mixture lumps are subjected to a pulverization step to obtain a mixed powder for an electrode.

Herein, the pulverization step may be carried out by using a pulverizing instrument, such as a blender or a grinder, but is not limited thereto. Particularly, the pulverization step may be carried out at a speed of 5,000-20,000 rpm, or 10,000-18,000 rpm, for 30 seconds to 10 minutes, particularly for 30 seconds to 1 minute. When the pulverization is carried out under the above-defined condition, there is a preferred effect in terms of the particle size of the mixed powder for an electrode and controlling the micropowder generation, but the scope of the present disclosure is not limited thereto.

According to some embodiments of the present disclosure, the method may further include, after pulverizing the mixture lumps, a step of classifying the pulverized mixed powder for an electrode. The classified mixed powder for an electrode may be subjected to calendering. In the classification step, the pulverized mixed powder for an electrode may be screened by using a mesh having voids with a predetermined size or lower to obtain a powder for an electrode with a predetermined size or higher.

After that, the mixed powder for an electrode is subjected to compression molding to obtain a mixture film. Herein, the process of compressing the mixed powder for an electrode to obtain a sheet-like dry electrode film is referred to as a calendering process. The dry electrode film may be prepared in the form of a sheet having a predetermined thickness through the calendering process. For example, the dry electrode film may have a strip-like shape having an aspect ratio of larger than 1. According to some embodiments of the present disclosure, the dry electrode film may have a thickness of 50-300 $\mu$m.

For example, the calendering process may be carried out by supplying the mixed powder for an electrode to a calendering device and carrying out thermal compressing by using the roll press(es) contained in the calendering device. In addition, the calendering process may be carried out by a roll-to-roll continuous process.

According to some embodiments of the present disclosure, the calendering device includes a roll press unit including two rollers facing each other, and the mixed powder for an electrode may be passed through the roll press unit and compressed into a sheet-like shape. A plurality of roll press units may be disposed continuously so that compression of the dry electrode film may be carried out many times. The number of roll press unit may be controlled suitably considering the thickness or pressing ratio of the dry electrode film.

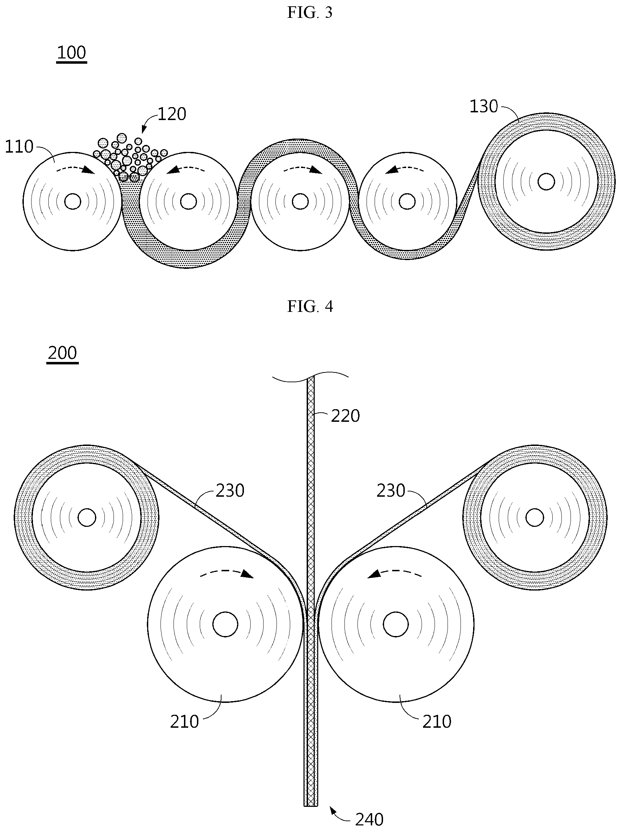

FIG. 3 is a schematic view illustrating the calendering process 100. Referring to FIG. 3, pressurization of the mixed powder 120 for an electrode is carried out many times by the calendering device including a plurality of calendering rollers 110 to provide a mixture film 130 for an electrode. The mixture film for an electrode is obtained by using no solvent, and thus may be also called a dry electrode film.

Meanwhile, independently in each roll press unit, the two rollers may be controlled to a suitable rotation speed ratio within a range of 1:1-1:10. For example, the rollers in at least one roll press unit may be controlled to a rotation speed ratio of 1:1-1:3. In addition, independently in each roll press unit, the rollers may be controlled to a temperature ranging from room temperature (25°C) to 250°C. The mixture film may be obtained through such a calendering process.

According to some embodiments of the present disclosure, the mixture film may have a porosity of 20-50 vol%. Within the above-defined range, the porosity may be controlled preferably to a value of 40 vol% or less, or 35 vol% or less. When the porosity satisfies the above-defined range, there are various preferred effects. According to some embodiments of the present disclosure, the porosity may be obtained by determining the apparent density of the mixture film and by using the true density calculated based on the true density of each ingredient and composition, according to the following Formula 2:

[Formula 2]

$$\text{Porosity (\%)} = \{1-(\text{Apparent density/True density})\} \times 100$$

According to some embodiments of the present disclosure, the mixture film may have a tensile strength of 0.2 MPa or more. According to some embodiments of the present disclosure, the mixture film may have a tensile strength of 0.2 MPa or more, 0.3 MPa or more, or 0.50 MPa or more.

The tensile strength may refer to a value determined as follows.

The film is cut into a size of width x length of 1 cm x 10 cm to prepare a specimen. Both ends of the specimen are drawn according to the standard of ASTM (American Society for Testing and Materials) D 638 by using an UTM instrument (available from ZwichRoell) under the conditions of a pre-load of 0.01 kg/cm and a test speed of 5 mm/min. Herein, the force applied to the specimen at break is divided by the initial sectional area to determine the tensile strength. The tensile strength is provided as average of three measurements.

After the calendering, lamination is carried out to form the resultant mixture film on at least one surface of a current collector.

According to some embodiments of the present disclosure, the lamination may be a step of pressing and attaching the mixture film onto a current collector. Also, the lamination may be carried out by using a lamination roll, wherein the lamination roll may be maintained at a temperature ranging from room temperature (25°C) to 250°C, but is not limited thereto.

FIG. 4 is a schematic view illustrating the lamination process 200 according to an embodiment of the present disclosure. Referring to FIG. 4, the electrode mixture film 230 is laminated with a current collector 220 to provide a dry electrode 240, wherein the lamination process is carried out by using a lamination roller 210. Meanwhile, according to the present disclosure, the electrode mixture film attached to the current collector through the lamination may also be referred to as an electrode active material layer. In addition, according to the present disclosure, the electrode mixture film, i.e. the electrode active material layer, is derived from the mixed powder for an electrode, and the content ratio of the ingredients in the electrode active material layer may fall within the same range as the mixed powder.

The electrode can be obtained according to the method as described above.

The resultant electrode may have an electrode resistance of 55 ohm·cm or less.

Electrochemical Device

In yet another aspect of the present disclosure, there is provided an electrochemical device including the above-described electrode.

The electrochemical device includes a positive electrode, a negative electrode and a separator layer interposed between the positive electrode and the negative electrode, wherein at least one of the positive electrode and the negative electrode is the above-described electrode.

According to some embodiments of the present disclosure, the separator layer may include a separator, a solid electrolyte membrane or both, used conventionally for an electrochemical device, and is not particularly limited, as long as it can prevent the positive electrode and the negative electrode from being in direct contact with each other.

According to some embodiments of the present disclosure, the electrochemical device includes any device which carries out electrochemical reaction, and particular examples thereof include all types of primary batteries, secondary batteries, fuel cells, solar cells or capacitors, such as super capacitor devices. Particularly, among the secondary batteries, preferred are lithium secondary batteries, including lithium metal secondary batteries, lithium-ion secondary batteries, lithium polymer secondary batteries or lithium-ion polymer secondary batteries.

The particular structure of such a secondary battery is known to those skilled in the art, and detailed description thereof will be omitted herein.

The secondary battery according to the present disclosure may be used as a unit cell in an energy storage system, but the use of the present disclosure is not limited thereto.

The particular structure of such an energy storage system is known to those skilled in the art, and detailed description thereof will be omitted herein.

MODE FOR DISCLOSURE

Hereinafter, the present disclosure will be explained in more detail with reference to Examples, but the following Examples are for illustrative purposes only and the scope of the present disclosure is not limited thereto.

**Preparation Example 1. Preparation of Conductive Material Master Batch**

A conductive material master batch was prepared as follows.

**Example 1**

First, 40 wt% of PVDF-HFP (m.p. 118°C), 10 wt% of PTFE (m.p. 348°C) and 50 wt% of carbon nanotubes (CNTs) (diameter ($D_{50}$) 12 nm, BET specific surface area 185 m$^2$/g) were introduced to a super-mixer (20L Super Mixer available from Heesung techwin) and mixed at 1,200 rpm for 3 minutes to prepare a mixture.

The resultant mixture was supplied to a twin screw extruder (diameter $\Phi$25, L/D 48) at 2-3 kg/hr through a metering pump, and melt kneaded at a temperature of the zone of extruder heaters #1-9 of 130-200°C and a screw speed of 400 rpm to perform extrusion through the die.

The resultant extrudate was introduced to a blender (available from SHIN-IL n MILL CO., LTD.) and pulverized therein at 10,000 rpm for 30 seconds to obtain a conductive material master batch.

**Example 2**

First, 40 wt% of PVDF (m.p. 174°C), 10 wt% of PTFE (m.p. 347°C) and 50 wt% of CNT (diameter ($D_{50}$) 12 nm, BET specific surface area 185 m$^2$/g) were introduced to a super-mixer (20L Super Mixer available from Heesung techwin) and mixed at 1,200 rpm for 3 minutes to prepare a mixture.

The resultant mixture was supplied to a twin screw extruder (diameter $\Phi$25, L/D 48) at 2-3 kg/hr through a metering pump, and melt kneaded at a temperature of the zone of extruder heaters #1-9 of 140-200°C and a screw speed of 400 rpm to perform extrusion through the die.

The resultant extrudate was introduced to a blender and pulverized therein at 10,000 rpm for 30 seconds to obtain a conductive material master batch.

### Example 3

A conductive material master batch was obtained in the same manner as Example 2, except that 30 wt% of PVDF (m.p. 174°C), 10 wt% of PTFE (m.p. 348°C) and 60 wt% of CNT (diameter ($D_{50}$) 12 nm, BET specific surface area 185 m$^2$/g) were used.

### Example 4

A conductive material master batch was obtained in the same manner as Example 1, except that 20 wt% of PVDF-HFP (m.p. 118°C), 20 wt% of PTFE (m.p. 348°C) and 60 wt% of CNT (diameter ($D_{50}$) 12 nm, BET specific surface area 185 m$^2$/g) were introduced.

### Comparative Example 1

First, 70 wt% of PVDF-HFP (m.p. 118°C) and 30 wt% of CNT (diameter ($D_{50}$) 12 nm, BET specific surface area 185 m$^2$/g) were introduced to a blender (available from SHIN-IL n MILL CO., LTD.) and mixed at 10,000 rpm for 1 minute to prepare a mixture.
Then, a rotor mixer (PVB-0.1 available from LM Tech) was stabilized at a temperature of 160°C, and the mixture prepared as described above was introduced to the rotor mixer and melt kneaded at a speed of 50 rpm for 10 minutes to obtain a conductive material master batch.

### Comparative Example 2

First, 35 wt% of PVDF-HFP (m.p. 118°C), 35 wt% of PTFE (m.p. 347°C) and 30 wt% of CNT (diameter ($D_{50}$) 12 nm, BET specific surface area 185 m$^2$/g) were introduced to a blender (PVB-0.1 available from LM Tech) and mixed at 10,000 rpm for 1 minute to prepare a mixture.
Then, a rotor mixer was stabilized at a temperature of 160°C, and the mixture prepared as described above was introduced to the rotor mixer and melt kneaded at a speed of 50 rpm for 10 minutes to obtain mixture lumps.
The resultant mixture lumps were introduced to a blender (available from SHIN-IL n MILL CO., LTD.) and pulverized therein at 10,000 rpm for 30 seconds to obtain a conductive material master batch.

### Comparative Example 3

A conductive material master batch was obtained in the same manner as Comparative Example 2, except that 40 wt% of PVDF-HFP (m.p. 118°C), 10 wt% of PTFE (m.p. 348°C) and 50 wt% of CNT (diameter ($D_{50}$) 12 nm, BET specific surface area 185 m$^2$/g) were used.

### Test Example 1. Evaluation of Physical Properties of Conductive Material Master Batch

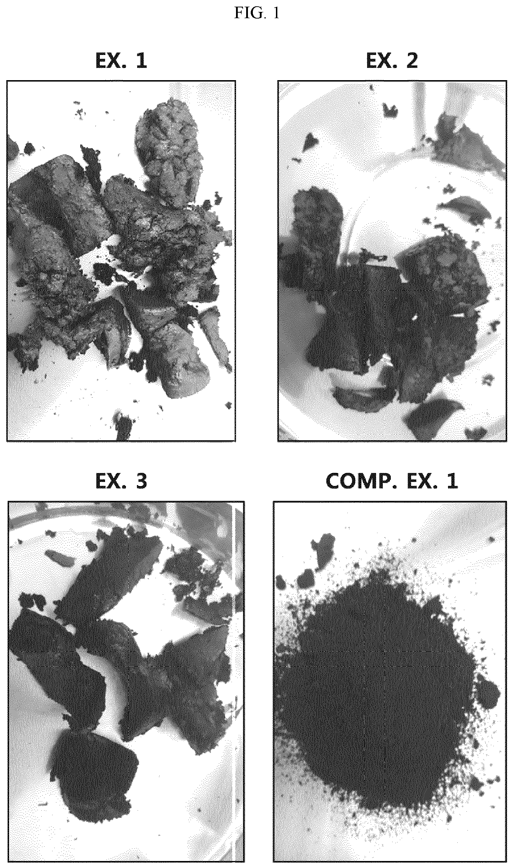

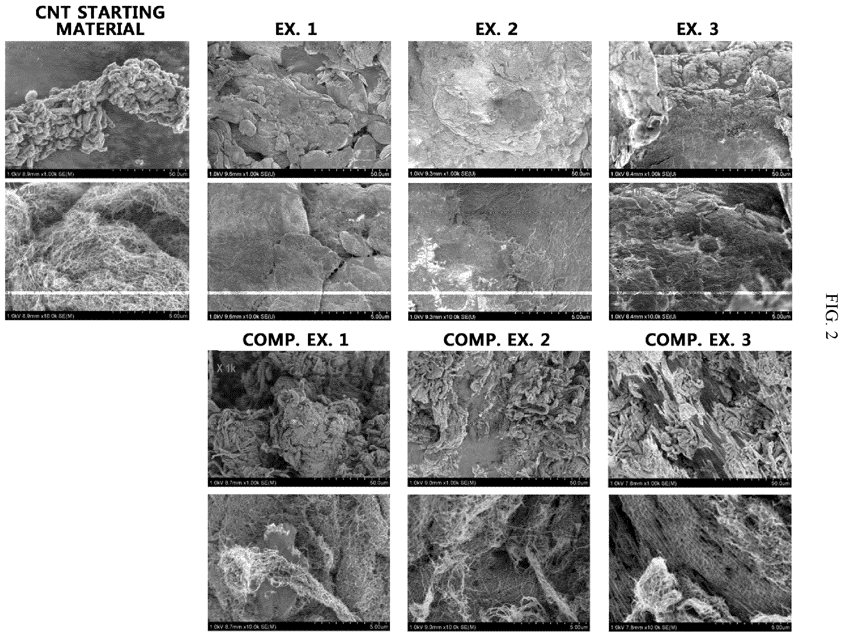

FIG. 1 illustrates the photographic image of each conductive material master batch obtained as described above, and FIG. 2 illustrates the SEM images thereof as taken by using a scanning electron microscope (S4800 available from Hitachi). In FIG. 2, the SEM image of the CNT starting material used for preparing the conductive material master batch is also shown for reference.
In addition, the result of the crystallization degree of each binder in the conductive material master batch determined by DSC thermal analysis using a differential scanning calorimeter (DSC 25 available from TA Instrument) is shown in the following Table 1.

Method for Determining Crystallization Degree

First, 5-12 mg of a sample was introduced to a differential scanning calorimeter (DSC), the melting point and heat of melting ($\Delta$Hm) were determined, while the temperature was increased at a rate of 10°C/min within a temperature range of 25-360°C under nitrogen atmosphere, and the crystallization degree was determined according to the following formula based on the heat of crystal fusion ($\Delta$Hm°) depending on the type of a binder:

$$\text{Crystallization degree of binder (Xc)} = (\triangle\text{Hm}/\triangle\text{Hm}°) \times 100 \ (\%)$$

The crystallization degree was determined by reference to the heat of 100% crystal fusion ($\Delta$Hm°) of the PVDF

binder of 105 J/g, the heat of 100% crystal fusion ($\Delta$Hm°) of the PVDF-HFP binder of 80 J/g, and the heat of 100% crystal fusion ($\Delta$Hm°) of the PTFE binder of 85.4 J/g.

Method for Evaluating CNT Dispersibility

The dispersibility of CNT was evaluated by measuring the CNT bundle diameter and nanofiber diameter in the SEM image as shown in FIG. 2.

[Table 1]

| | Content of starting materials (parts by weight) | | | | CNT BET specific surface area (m²/g) | Melt kneading | Evaluation result of CNT dispersibility | Crystallization degree (%) | | |
|---|---|---|---|---|---|---|---|---|---|---|
| | PVDF-HFP | PVDF | PTFE | CNT | | | | PVDF-HFP | PVDF | PTFE |
| Ex. 1 | 40 | - | 10 | 50 | 185 | Twin screw extruder | Nanofibers | 6 | - | 0 |
| Ex. 2 | - | 40 | 10 | 50 | 185 | Twin screw extruder | Nanofibers | - | 26 | 14 |
| Ex. 3 | - | 30 | 10 | 60 | 185 | Twin screw extruder | Nanofibers | - | 25 | 9 |
| Comp. Ex. 1 | 70 | - | - | 30 | 185 | Rotor mixer | Bundle lumps of 100 $\mu$m or more | - | - | - |
| Comp. Ex. 2 | 35 | - | 35 | 30 | 185 | Rotor mixer | Bundle lumps of 50-100 $\mu$m | 19 | - | 81 |
| Comp. Ex. 3 | 40 | - | 10 | 50 | 185 | Rotor mixer | Bundle lumps of 50-100 $\mu$m and nanofi-bers | 10 | - | 32 |

Referring to the photographic images of Examples 1-3 and Comparative Examples 1-3 as shown in FIG. 1, it can be seen that Comparative Example 1 using no PTFE binder cannot be used as a desired conductive master batch, since the powdery starting materials were not aggregated.

Referring to the SEM images of Examples 1-3 and Comparative Examples 1-3 as shown in FIG. 2, in the case of Comparative Examples 1 and 2 prepared by using a rotor mixer, it can be seen that CNTs were not dispersed homogeneously but aggregated in the form of bundles.

It can be seen from the result of Table 1 that since melt kneading is carried out by a rotor mixer in Comparative Examples 1-3, while not using a twin screw extruder, the kneading and extrusion were performed unstably and the crystallization degree of PTFE was larger than 30%, and thus Comparative Examples 1-3 cannot be used as a desired conductive master batch.

**Preparation Example 2. Manufacture of Electrode**

The conductive material master batch prepared as described above was used to manufacture an electrode according to the following method.

**Example 5**

First, lithium nickel cobalt manganese aluminum oxide (NCMA, $Li[Ni_{0.73}Co_{0.05}Mn_{0.15}Al_{0.02}]O_2$) as a positive electrode material, the conductive master batch according to Example 1 and polytetrafluoroethylene (PTFE) were introduced to a blender at a weight ratio of 97:1.6:1.4 and mixed at 10,000 rpm for 1 minute to prepare a mixture. A kneader was stabilized at a temperature of 180°C, and then the mixture was introduced to the kneader and kneaded at a speed of 40 rpm under a pressure of 4 atm to obtain mixture lumps. The mixture lumps were introduced to a blender and pulverized at 10,000 rpm for 30 seconds, and the pulverized product was classified with a sieve having pores of 1 mm to obtain a mixed powder for an electrode. Herein, PVDF-HFP and PTFE in the resultant mixed powder for an electrode had a crystallization degree of 0% and 6.8%, respectively.

Then, the mixed powder for an electrode was introduced to a lab calender (roll diameter: 200 mm, roll temperature: 100°C, roll speed ratio 1.5) and compressed therein to obtain an electrode mixture film. After that, the resultant electrode mixture film was disposed on both surfaces of aluminum foil (13 $\mu$m), and lamination was carried out through a roll press having a roll temperature of 30°C to obtain an electrode.

**Example 6**

An electrode was obtained in the same manner as Example 5, except that lithium nickel cobalt manganese aluminum oxide (NCMA, $Li[Ni_{0.73}Co_{0.05}Mn_{0.15}Al_{0.02}]O_2$) as a positive electrode material, the conductive master batch according to Example 4 and polytetrafluoroethylene (PTFE) were used at a weight ratio of 97:1.34:1.66.

Herein, PVDF-HFP and PTFE in the resultant mixed powder for an electrode had a crystallization degree of 0% and 10.6%, respectively.

**Comparative Example 4**

An electrode was obtained in the same manner as Example 5, except that the conductive material master batch according to Comparative Example 3 was used.

Herein, PVDF-HFP and PTFE in the resultant mixed powder for an electrode had a crystallization degree of 0% and 15.6%, respectively.

**Comparative Example 5**

First, 96.3 wt% of lithium nickel cobalt manganese aluminum oxide (NCMA, $Li[Ni_{0.73}Co_{0.05}Mn_{0.15}Al_{0.02}]O_2$) as a positive electrode material, 2.2 wt% of PTFE (m.p. 348°C) and 1.5 wt% of carbon black (BET specific surface area 65 $m^2/g$) were introduced to a super-mixer (20L Super Mixer available from Heesung techwin) and mixed at 1,200 rpm for 3 minutes to prepare a mixture.

A kneader was stabilized at a temperature of 180°C, and then the mixture was introduced to the kneader and kneaded at a speed of 40 rpm under a pressure of 4 atm for 7 minutes to obtain mixture lumps.

Then, an electrode was obtained in the same manner as Example 5.

**Test Example 2: Composition of Mixed Powder for Electrode and Evaluation of Crystallization Degree of Electrode binder**

The following Table 2 shows the composition of the mixed powder for an electrode used for manufacturing the electrode according to each of Examples 5 and 6 and Comparative Examples 4 and 5.

In addition, the crystallization degree of the electrode binder contained in the mixed powder for an electrode was determined. The result is also shown in Table 2.

The crystallization degree of the binder was determined in the same manner as Test Example 1.

[Table 2]

| | Conductive material | BET (m²/g) | Composition of mixed powder for electrode | | | | Crystallization degree of electrode binder (%) | |
|---|---|---|---|---|---|---|---|---|
| | | | Content of active material (wt%) | Content of conductive material (wt%) | Content of first binder polymer (wt%) | Content of second binder polymer (wt%) | PVDF-HFP | PTFE |
| Ex. 5 | CNT conductive material master batch | CNT, 185 | 97 | 0.8 | 0.8 | 1.4 | 0 | 6.8 |
| Ex. 6 | | CNT, 185 | 97 | 0.8 | 0.54 | 1.66 | 0 | 10.6 |
| Comp. Ex. 4 | | CNT, 185 | 97 | 0.8 | 0.8 | 1.4 | 0 | 15.6 |
| Comp. Ex. 5 | Carbon black | Carbon black, 65 | 96.3 | 1.5 | - | 2.2 | - | 5.1 |

It can be seen from Table 2 that it was possible to reduce the content of the conductive material and to increase the content of the active material in the mixed powder for an electrode, when using the CNT conductive material master batch.

It can be also seen that Examples 5 and 6 using a twin screw extruder provided the electrode binder in the mixed powder for an electrode with a crystallization degree of 15% or less, as compared to Comparative Example 3 using a rotor mixer in the melt kneading step, when using the CNT conductive material master batch.

**Test Example 3. Evaluation of Physical Properties of Electrode**

The tensile strength and electrode resistance value of the electrode mixture film according to each of Examples 1 and 2 and Comparative Examples 1 and 2 are shown in the following Table 3.

In addition, the electrode resistance value expressed by 1 wt% of the content of the conductive material is also shown in Table 3.

Determination of Tensile Strength of Electrode Mixture Film

The film was cut into a size of width x length of 1 cm x 10 cm to prepare a specimen. Both ends of the specimen were drawn according to the standard of ASTM (American Society for Testing and Materials) D 638 by using an UTM instrument (available from ZwichRoell) under the conditions of a pre-load of 0.01 kg/cm and a test speed of 5 mm/min.

Herein, the force applied to the specimen at break was divided by the initial sectional area to determine the tensile strength. The tensile strength was provided as average of three measurements.

Determination of Electrode Resistance

The electrode sample was introduced to Multi-probe Tester (HIOKI, RM2610), the potential difference was measured among the probes (45 probes) under the conditions of a current at the positive electrode of 100 μA, current at the negative electrode of 10 mA and a voltage of 0.5 V, and the measured value was provided as an electrode resistance value.

Conversion of Electrode Resistance Value

The resistance value determined as described above was expressed by 1 wt% of the content of the conductive material according to the following Formula 1:

$$[\text{Formula 1}]$$

$$Rt = Cw \times Rw$$

wherein Rt represents an electrode resistance value expressed by 1 wt% of the content of the conductive material, Cw represents the content of the conductive material based on the total weight of the electrode active material layer in the target electrode, and Rw represents the electrode resistance value of the target electrode.

[Table 3]

| | Physical properties of electrode mixture film | Physical properties of electrode | Physical properties of electrode |
|---|---|---|---|
| | Tensile strength (MPa) | Measured resistance value (ohm·cm) | Converted resistance value (ohm·cm) |
| Ex. 5 | 0.54 | 53.98 | 43.18 |
| Ex. 6 | 0.56 | 52.49 | 41.99 |
| Comp. Ex. 4 | 0.68 | 144.85 | 115.88 |
| Comp. Ex. 5 | 0.84 | 57.56 | 86.34 |

As can be seen from Table 3, each of Examples 5 and 6 using the CNT conductive material master batch in preparing the mixed film for an electrode showed a significantly improved electrode resistance value, while maintaining a tensile strength of 0.2 Mpa or more.

Particularly, each of Examples 5 and 6 showed an electrode resistance value of 55 ohm·cm or less, while including the conductive material in an amount of less than 1 wt%. When the electrode resistance of the electrode according to each of Examples 5 and 6 is expressed by 1 wt% of the content of the conductive material, it can be seen that a significantly improved electrode resistance value was provided as compared to Comparative Examples 3 and 4.

Therefore, it can be seen that Examples 5 and 6 provided a significantly improved electrode resistance value. It is shown that this was because the CNT conductive material master batch was used for preparing the mixed powder for an electrode and the electrode mixture film, and thus the conductive material having a large BET specific surface area showed improved dispersibility, the binder in the mixed powder for an electrode showed a reduced crystallization degree, and the content of the active material was increased.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

[Description of Main Drawing Numerals]

100: Calendering step
110: Calendering roller
120: Mixed powder for electrode
130: Electrode mixture film
200: Lamination step
210: Lamination roller
220: Current collector
230: Electrode mixture film
240: Dry electrode

**Claims**

1.  A conductive material master batch comprising a conductive material, a polyvinylidene fluoride (PVDF)-based binder, and a polytetrafluoroethylene (PTFE) binder,

    wherein the conductive material has a BET specific surface area of 80 m$^2$/g or more, and
    each of the PVDF-based binder and the PTFE binder independently has a crystallization degree of 30% or less.

2.  The conductive material master batch according to claim 1, wherein the conductive material comprises carbon nanotubes alone, or carbon nanotubes and a dot-like conductive material.

3. The conductive material master batch according to claim 1, wherein the carbon nanotubes have a diameter of 0.1-50 nm.

4. The conductive material master batch according to claim 1, which comprises 20-70 parts by weight of the conductive material, 5-60 parts by weight of the PVDF-based binder and 0.1-50 parts by weight of the PTFE binder.

5. An electrode comprising:

a current collector; and an electrode active material layer formed on at least one surface of the current collector, wherein the electrode active material layer comprises an electrode active material, an electrode conductive material and an electrode binder,
the electrode binder is fibrilized to accomplish the binding of the electrode active material and the electrode conductive material, and
the electrode has an electrode resistance of 55 ohm·cm or less.

6. The electrode according to claim 5, wherein the content of the electrode conductive material is 1 wt% or less based on the total weight of the electrode active material layer.

7. The electrode according to claim 5, wherein the electrode binder has a crystallization degree of 15% or less.

8. The electrode according to claim 5, wherein the content of the electrode active material is 95 wt% or more based on the total weight of the electrode active material layer.

9. The electrode according to claim 5, wherein the electrode conductive material comprises a carbonaceous material having a BET specific surface area of 80 $m^2/g$ or more.

10. The electrode according to claim 5, wherein the electrode conductive material comprises carbon nanotubes alone, or carbon nanotubes and a dot-like conductive material.

11. The electrode according to claim 5, wherein the electrode conductive material and the electrode binder comprise those derived from the conductive material master batch as defined in any one of claims 1 to 4.

12. A method for preparing a conductive material master batch, comprising the steps of:

preparing a mixture by mixing a conductive material, a PVDF-based binder and a PTFE binder;
forming an extrudate by kneading and extruding the mixture; and
pulverizing the extrudate,
wherein the conductive material has a BET specific surface area of 80 $m^2/g$ or more, and each of the PVDF-based binder and the PTFE binder in the resultant conductive material master batch independently has a crystallization degree of 30% or less.

13. A method for manufacturing an electrode, including the steps of:

preparing a mixture by mixing a conductive material with a first binder;
forming an extrudate by kneading and extruding the mixture;
pulverizing the extrudate to obtain a conductive material master batch; and
forming an electrode active material layer on at least one surface of a current collector from a mixture containing an electrode active material, the conductive material master batch and a second binder.

14. The method for manufacturing an electrode according to claim 13, wherein the step of forming an electrode active material layer comprises the steps of:

preparing a mixture by mixing an electrode active material, the conductive material master batch and the second binder;
kneading the resultant mixture at a high temperature and under a low shear rate to obtain mixture lumps;
pulverizing the mixture lumps at a high shear rate to obtain a mixed powder for an electrode;
calendering the mixed powder for an electrode to obtain a mixture film; and
disposing the mixture film on at least one surface of a current collector, and carrying out lamination.

15. An electrochemical device comprising a positive electrode, a negative electrode and a separator layer interposed between the positive electrode and the negative electrode, wherein at least one of the positive electrode and the negative electrode is the electrode as defined in any one of claims 5 to 11.

**Patentansprüche**

1. Masterbatch von leitfähigem Material, umfassend ein leitfähiges Material, ein Polyvinylidenfluorid (PVDF)-basiertes Bindemittel und ein Polytetrafluorethylen (PTFE)-Bindemittel,

    wobei das leitfähige Material eine BET-spezifische Oberfläche von 80 m$^2$/g oder mehr aufweist, und jedes des PVDF-basierten Bindemittels und des PTFE-Bindemittels unabhängig voneinander einen Kristallisationsgrad von 30 % oder weniger aufweist.

2. Masterbatch von leitfähigem Material nach Anspruch 1, wobei das leitfähige Material Kohlenstoffnanoröhren allein oder Kohlenstoffnanoröhren und ein punktartiges leitfähiges Material umfasst.

3. Masterbatch von leitfähigem Material nach Anspruch 1, wobei die Kohlenstoffnanoröhren einen Durchmesser von 0,1 bis 50 nm aufweisen.

4. Masterbatch von leitfähigem Material nach Anspruch 1, welches 20-70 Gewichtsteile des leitfähigen Materials, 5-60 Gewichtsteile des PVDF-basierten Bindemittels und 0,1-50 Gewichtsteile des PTFE-Bindemittels umfasst.

5. Elektrode, umfassend:

    einen Stromabnehmer; und eine Elektrodenaktivmaterialschicht, die auf wenigstens einer Fläche des Stromabnehmers gebildet ist,
    wobei die Elektrodenaktivmaterialschicht ein Elektrodenaktivmaterial, ein Elektroden-leitfähiges Material und ein Elektrodenbindemittel umfasst,
    das Elektrodenbindemittel fibrilliert ist, um das Binden des Elektrodenaktivmaterials und des Elektroden-leitfähigen Materials zu bewirken, und
    die Elektrode einen Elektrodenwiderstand von 55 Ohm·cm oder weniger aufweist.

6. Elektrode nach Anspruch 5, wobei der Gehalt des Elektroden-leitfähigen Materials 1 Gew.-% oder weniger, bezogen auf das Gesamtgewicht der Elektrodenaktivmaterialschicht, beträgt.

7. Elektrode nach Anspruch 5, wobei das Elektrodenbindemittel einen Kristallisationsgrad von 15 % oder weniger aufweist.

8. Elektrode nach Anspruch 5, wobei der Gehalt des Elektrodenaktivmaterials 95 Gew.-% oder mehr, bezogen auf das Gesamtgewicht der Elektrodenaktivmaterialschicht, beträgt.

9. Elektrode nach Anspruch 5, wobei das Elektroden-leitfähige Material ein kohlenstoffhaltiges Material umfasst, welches eine BET-spezifische Oberfläche von 80 m$^2$/g oder mehr aufweist.

10. Elektrode nach Anspruch 5, wobei das Elektroden-leitfähige Material Kohlenstoffnanoröhren allein oder Kohlenstoffnanoröhren und ein punktartiges leitfähiges Material umfasst.

11. Elektrode nach Anspruch 5, wobei das Elektroden-leitfähige Material und das Elektrodenbindemittel solche umfassen, welche aus dem Masterbatch von leitfähigem Material wie in einem der Ansprüche 1 bis 4 definiert abgeleitet sind.

12. Verfahren zum Herstellen eines Masterbatches von leitfähigem Material, umfassend die Schritte aus:

    Herstellen einer Mischung durch Mischen eines leitfähigen Materials, eines PVDF-basierten Bindemittels und eines PTFE-Bindemittels;
    Bilden eines Extrudats durch Kneten und Extrudieren der Mischung; und Pulverisieren des Extrudats,
    wobei das leitfähige Material eine BET-spezifische Oberfläche von 80 m$^2$/g oder mehr aufweist und jedes des PVDF-basierten Bindemittels und des PTFE-Bindemittels in dem resultierenden Masterbatch von leitfähigem Material unabhängig voneinander einen Kristallisationsgrad von 30 % oder weniger aufweist.

13. Verfahren zum Fertigen einer Elektrode, umfassend die Schritte aus:

Herstellen einer Mischung durch Mischen eines leitfähigen Materials mit einem ersten Bindemittel;
Bilden eines Extrudats durch Kneten und Extrudieren der Mischung;
Pulverisieren des Extrudats, um einen Masterbatch von leitfähigem Material zu erhalten; und
Bilden einer Elektrodenaktivmaterialschicht auf wenigstens einer Fläche eines Stromabnehmers aus einer Mischung, welche ein Elektrodenaktivmaterial, den Masterbatch von leitfähigem Material und ein zweites Bindemittel enthält.

14. Verfahren zum Fertigen einer Elektrode nach Anspruch 13, wobei der Schritt des Bildens einer Elektrodenaktivmaterialschicht die Schritte umfasst aus:

Herstellen einer Mischung durch Mischen eines Elektrodenaktivmaterials, des Masterbatches von leitfähigem Material und des zweiten Bindemittels;
Kneten der resultierenden Mischung bei einer hoher Temperatur und unter einer geringen Schergeschwindigkeit, um Mischungsklumpen zu erhalten;
Pulverisieren der Mischungsklumpen bei einer hohen Schergeschwindigkeit, um ein gemischtes Pulver für eine Elektrode zu erhalten;
Kalandrieren des gemischten Pulvers für eine Elektrode, um einen Mischungsfilm zu erhalten; und
Aufbringen des Mischungsfilms auf wenigstens einer Fläche eines Stromabnehmers und Durchführen von Laminierung.

15. Elektrochemische Vorrichtung, umfassend eine positive Elektrode, eine negative Elektrode und eine zwischen der positiven Elektrode und der negativen Elektrode angeordnete Trennschicht, wobei wenigstens eine der positiven Elektrode und der negativen Elektrode die in einem der Ansprüche 5 bis 11 definierte Elektrode ist.

**Revendications**

1. Mélange maître de matériau conducteur comprenant un matériau conducteur, un liant à base de poly(fluorure de vinylidène) (PVDF), et un liant polytétrafluoroéthylène (PTFE),

dans lequel le matériau conducteur possède une surface spécifique BET de 80 m$^2$/g ou plus, et
chacun parmi le liant à base de PVDF et le liant PTFE possède indépendamment un degré de cristallisation de 30 % ou moins.

2. Mélange maître de matériau conducteur selon la revendication 1, dans lequel le matériau conducteur comprend des nanotubes de carbone seuls, ou des nanotubes de carbone et un matériau conducteur de type point.

3. Mélange maître de matériau conducteur selon la revendication 1, dans lequel les nanotubes de carbone possèdent un diamètre de 0,1 à 50 nm.

4. Mélange maître de matériau conducteur selon la revendication 1, qui comprend 20 à 70 parties en poids du matériau conducteur, 5 à 60 parties en poids du liant à base de PVDF et 0,1 à 50 parties en poids du liant PTFE.

5. Électrode comprenant :

un collecteur de courant ; et une couche de matériau actif d'électrode formée sur au moins une surface du collecteur de courant,
dans laquelle la couche de matériau actif d'électrode comprend un matériau actif d'électrode, un matériau conducteur d'électrode et un liant d'électrode,
le liant d'électrode est fibrillé pour accomplir la liaison du matériau actif d'électrode et du matériau conducteur d'électrode, et
l'électrode possède une résistance de 55 ohms·cm ou moins.

6. Électrode selon la revendication 5, dans laquelle la teneur du matériau conducteur d'électrode est de 1 % en poids ou moins sur la base du poids total de la couche de matériau actif d'électrode.

7. Électrode selon la revendication 5, dans laquelle le liant d'électrode possède un degré de cristallisation de 15 % ou moins.

8. Électrode selon la revendication 5, dans laquelle la teneur du matériau actif d'électrode est de 95 % en poids ou plus sur la base du poids total de la couche de matériau actif d'électrode.

9. Électrode selon la revendication 5, dans laquelle le matériau conducteur d'électrode comprend un matériau carboné ayant une surface spécifique BET de 80 $m^2$/g ou plus.

10. Électrode selon la revendication 5, dans laquelle le matériau conducteur d'électrode comprend des nanotubes de carbone seuls, ou des nanotubes de carbone et un matériau conducteur de type point.

11. Électrode selon la revendication 5, dans laquelle le matériau conducteur d'électrode et le liant d'électrode comprennent ceux dérivés du mélange maître de matériau conducteur tel que défini selon l'une quelconque des revendications 1 à 4.

12. Procédé de préparation d'un mélange maître de matériau conducteur, comprenant les étapes de :

la préparation d'un mélange par le mélange d'un matériau conducteur, d'un liant à base de PVDF et d'un liant PTFE ;
la formation d'un extrudat par le malaxage et l'extrusion du mélange ; et
la pulvérisation de l'extrudat,
dans lequel le matériau conducteur possède une surface spécifique BET de 80 $m^2$/g ou plus, et chacun parmi le liant à base de PVDF et le liant PTFE dans le mélange maître de matériau conducteur résultant possède indépendamment un degré de cristallisation de 30 % ou moins.

13. Procédé de fabrication d'une électrode, comportant les étapes de :

la préparation d'un mélange par le mélange d'un matériau conducteur avec un premier liant ;
la formation d'un extrudat par le malaxage et l'extrusion du mélange ;
la pulvérisation de l'extrudat pour obtenir un mélange maître de matériau conducteur ; et
la formation d'une couche de matériau actif d'électrode sur au moins une surface d'un collecteur de courant à partir d'un mélange contenant un matériau actif d'électrode, le mélange maître de matériau conducteur et un second liant.

14. Procédé de fabrication d'une électrode selon la revendication 13, dans lequel l'étape de formation d'une couche de matériau actif d'électrode comprend les étapes de :

la préparation d'un mélange par le mélange d'un matériau actif d'électrode, du mélange maître de matériau conducteur et du second liant ;
le malaxage du mélange résultant à une température élevée et sous un faible taux de cisaillement pour obtenir des grumeaux de mélange ;
la pulvérisation des grumeaux de mélange à un taux de cisaillement élevé pour obtenir une poudre mélangée pour une électrode ;
le calandrage de la poudre mélangée pour une électrode pour obtenir un film de mélange ; et
la disposition du film de mélange sur au moins une surface d'un collecteur de courant, et la réalisation d'une stratification.

15. Dispositif électrochimique comprenant une électrode positive, une électrode négative et une couche de séparateur interposée entre l'électrode positive et l'électrode négative, dans lequel au moins l'une parmi l'électrode positive et l'électrode négative est l'électrode telle que définie selon l'une quelconque des revendications 5 à 11.

FIG. 1

EX. 1

EX. 2

EX. 3

COMP. EX. 1

FIG. 2

FIG. 3

<u>100</u>

FIG. 4

<u>200</u>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220049191

- KR 1020220049192